Europäisches Patentamt

(19) European Patent Office

Office européen des brevets

(11) Veröffentlichungsnummer: **0 015 579**
**B1**

(12) # EUROPÄISCHE PATENTSCHRIFT

(45) Veröffentlichungstag der Patentschrift:
23.02.83

(51) Int. Cl.³: **H 02 G 9/10**

(21) Anmeldenummer: **80101192.5**

(22) Anmeldetag: **10.03.80**

(54) **Prüfstation.**

(30) Priorität: **12.03.79 US 19989**

(43) Veröffentlichungstag der Anmeldung:
**17.09.80 Patentblatt 80/19**

(45) Bekanntmachung des Hinweises auf die Patenterteilung:
**23.02.83 Patentblatt 83/8**

(84) Benannte Vertragsstaaten:
**BE CH DE LU NL SE**

(56) Entgegenhaltungen:
**keine**

**Die Akte enthält technische Angaben, die nach dem Eingang der Anmeldung eingereicht wurden und die nicht in dieser Patentschrift enthalten sind.**

(73) Patentinhaber: **Borin, Frank W., 2552 Almanden Court, Bel Air California 90024 (US)**
Patentinhaber: **Thomas, Jeffrey G., 17800 Rayen, Northridge California 91423 (US)**

(72) Erfinder: **Borin, Frank W., 2552 Almanden Court, Bel Air California 90024 (US)**
Erfinder: **Thomas, Jeffrey G., 17800 Rayen, Northridge California 91423 (US)**

(74) Vertreter: **Radt, Wilhelm Peter, Dr. et al, Patentanwälte Radt, Finkener, Ernesti Heinrich-König-Strasse 119, D-4630 Bochum 1 (DE)**

## Prüfstation

Die Erfindung bezieht sich auf eine Prüfstation, in der von unten eingezogene elektrische Prüfleitungen für vorzugsweise unterirdische Rohre, Kabel und dergleichen an ein Gerät angeschlossen werden, das auf einen elektrischen Strom oder ein elektrisches Potential anspricht, und die aus einem Gehäuse, das fluchtend mit der Oberfläche des Erdbodens liegt und von aussen zugänglich ist, wenn die Prüfstation in den Erdboden eingesetzt ist, einem Einsatz, der eine luftdicht abgeschlossene Tasche innerhalb seiner Seitenwände bildet, die von einer festen oberen Wandung ausgehen und mit einem Flansch versehen sind, der nach aussen übersteht und sich auf dem oberen Ende des Gehäuses abstützt, und einem innerhalb des Einsatzes angebrachten Befestigungselement für einen Klemmenblock besteht, der innerhalb der luftdicht abgeschlossenen Tasche des Einsatzes sitzt, wobei das Befestigungselement für den Klemmenblock durch Drehung verriegelbar ist. Eine derartige Prüfstation ist aus der US-PS 3 466 379 bekannt.

Derartige, sogenannte kathodische Prüfstationen werden benutzt, um von aussen einen Zugang zu Prüfdrähten zum Überwachen elektrischer Ströme und Potentiale zu haben, die mit unter der Erde verlegten Rohrleitungen, Kabeln und anderen metallischen Bauteilen verbunden sind. Die Prüfstationen enthalten Klemmen, an die die Leitungen zum Messen unterirdischer Erdpotentiale, von Kathoden-Anodenschutzströmen und der Widerstandsintegrität der Isolierung zwischen den unter der Erde verlegten Bauteilen, einschliesslich einer Rohrleitung und deren Gehäuse angeschlossen werden können. Prüfstationen dieser Art dienen auch zum Auffinden und Messen elektrischer Streuströme und elektrischer Potentiale in unter der Erde verlegten Bauteilen.

Prüfstationen aus Aluminiumguss sind der Korrosion ausgesetzt und schützen das Bedienungspersonal nicht vor elektrischen Schlägen. Derartige Stationen laufen häufig, wenn sie in Strassen oder Gehwegen angeordnet werden, mit Oberflächenwasser oder Grundwasser voll, so dass die innenliegenden Teile zerstört werden. Bei Temperaturen unter Null sind die Klemmen häufig nicht zugänglich, und es kommt zum Bruch des Gehäuses. Auch bei Verwendung von Kunststoff besteht die Gefahr, dass Wasser in das Gehäuse eintritt und die freiliegenden Enden der Drähte und die Klemmen zerstört. Die Bildung von Eis in dem Gehäuse der Prüfstation verhindert den Zugang zu den Klemmen.

Bei der eingangs erwähnten bekannten Vorrichtung wird eine luftdicht abgeschlossene Tasche benutzt, in die der Klemmenblock von unten hineinragt. Der Sockel des Klemmenblockes, durch den die anzuschliessenden Kabel von unten hindurchgezogen werden müssen, ist mit der Tasche durch Schrauben verbunden, so dass der Klemmenblock erst zugänglich ist, wenn die Schraubverbindung gelöst ist. Ein weiterer Nachteil ist darin zu sehen, dass die bekannte Vorrichtung im unteren Abschnitt eine Halterung benötigt, mit der der Sockel des Klemmenblockes an einer Führung befestigt wird, und dass die einzelnen Kabel vor der Montage durch den Sockel des Klemmenblocks gezogen werden müssen.

Der Erfindung liegt die Aufgabe zugrunde, die bekannte Vorrichtung hinsichtlich der Anbringung des Klemmenblocks in der luftdicht abgeschlossenen Tasche sowie die Zugänglichkeit und die Montage des Klemmenblockes zu vereinfachen.

Ausgehend von einer Prüfstation der eingangs beschriebenen Art, besteht die Erfindung darin, dass zur Befestigung des Klemmenblockes in der Tasche Verriegelungsflächen vorgesehen sind, die im Abstand von der festen oberen Wandung des Trägers in die Tasche hineinragen, und dass der Klemmenblock eine Befestigungsplatte, die an den Verriegelungsflächen vorbeischiebbar und durch Drehen innerhalb der Tasche mit den Verriegelungsflächen verriegelbar ist, und eine Trägerplatte enthält, die sich von der Befestigungsplatte ausgehend in die luftdicht abgeschlossene Tasche erstreckt.

Eine bevorzugte Ausführungsform der Erfindung sieht vor, dass die Verriegelungsflächen durch nach unten und innen abgebogene Enden eines Bügels gebildet werden, der an der oberen Wandung des Einsatzes angebracht ist.

Um das Gehäuse gegen Verdrehen nach dem Einsetzen in den Erdboden zu sichern, sieht die Erfindung bevorzugt vor, das Gehäuse mit radial vorstehenden und im Abstand voneinander angeordneten Rippen zu versehen, die sich in Längsrichtung an der Aussenseite des Gehäuses erstrecken. Um das Gehäuse in einer Stellung zu halten, bei der sein oberes Ende mit dem Erdboden fluchtet, enthält das Gehäuse am unteren Ende eine Verankerungsstange, die sich nach aussen in den Erdboden erstreckt. Die Verwendung einer derartigen Verankerungsstange ist an sich aus der DE-OS 2 725 461 bekannt.

Weitere bevorzugte Merkmale der Erfindung ergeben sich aus den Unteransprüchen 5 bis 9.

Auf der Zeichnung ist ein Ausführungsbeispiel der Erfindung dargestellt. Es zeigen:

Fig. 1 einen Längsschnitt durch eine Prüfstation gemäss vorliegender Erfindung,

Fig. 2 einen Schnitt längs der Linie II–II der Fig. 1,

Fig. 3 einen Schnitt längs der Linie III–III der Fig. 1,

Fig. 4 eine perspektivische Darstellung des Klemmenblockes und

Fig. 5 eine perspektivische Darstellung einer Klemmeinrichtung zum Halten des Klemmenblockes.

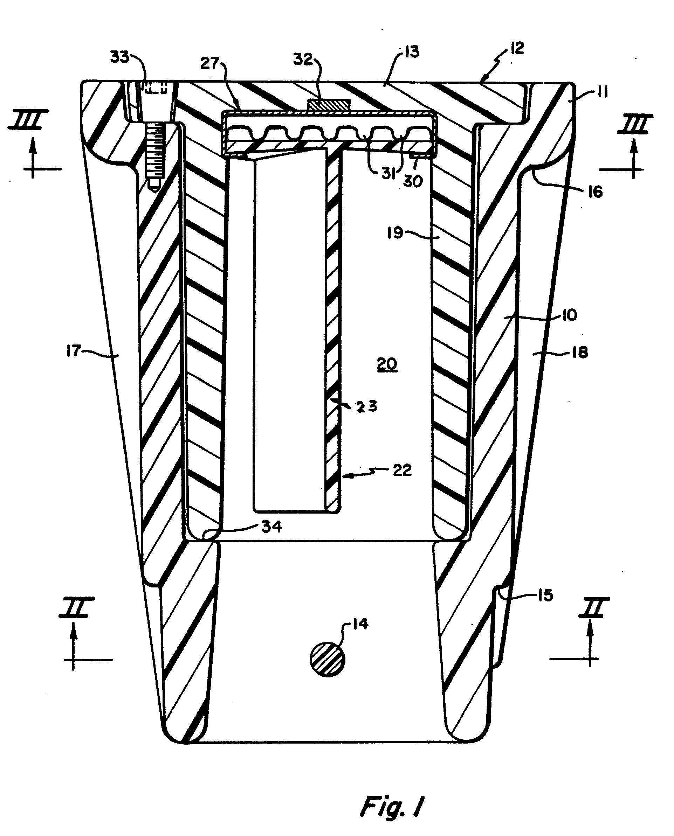

Wie sich aus den Fig. 1 bis 3 ergibt, besteht die Prüfstation aus einem im wesentlichen rohrförmigen Gehäuse 10, das an seinem oberen Ende mit einem Flansch 11 versehen ist, in dem eine Ausnehmung angebracht ist, auf der der Flansch eines Einsatzes oder Trägers 12 aufliegt. Der Träger besteht aus einer oberen Wandung 13, die gegenüber dem übrigen Körper zur Bildung des Flansches vorsteht, der in der Ausnehmung des Flansches 11 so angeordnet ist, dass die Oberfläche der Wandung 13 mit der Oberkante des Gehäuses fluchtet. Das Einsetzen der Vorrichtung in das Erdreich erfolgt so, dass die oberen Kanten des Gehäuses und des Trägers mit der Oberfläche des Erdreichs fluchten. Auf diese Weise wird eine übermässige Belastung der Prüfstation beim Überfahren durch ein Fahrzeug oder dergleichen vermieden. Durch zwei sich diametral gegenüberliegende Bohrungen im unteren Abschnitt des Gehäuses 10 wird eine Verankerungsstange oder ein Rohr 14 geschoben, das beidseitig gegenüber dem Gehäuse 10 nach aussen vorsteht und das Gehäuse gegen Herausziehen nach oben oder Eindrücken nach unten sichert. Das Gehäuse ist ferner mit einer unteren Abstufung 15 und einer Abstufung 16 in der Nähe des oberen Endes versehen, durch die zusätzlich ein Absinken des Gehäuses in das Erdreich bei einer Belastung der Oberfläche vermieden wird. Ferner sind breite Rippen 17 und schmale Rippen 18 vorgesehen, die sich radial im Abstand voneinander an der Aussenseite in Längsrichtung des Gehäuses erstrekken, so dass zwischen den einzelnen Rippen Hohlräume gebildet werden, die sich mit Erdreich anfüllen und eine Sicherung gegen Verdrehen des Gehäuses um die senkrechte Achse bilden. Durch diese Verankerung wird gleichzeitig eine Sicherung gegen Verdrehungen durch Kräfte erreicht, die an einer oberen Kante des Gehäuses angreifen.

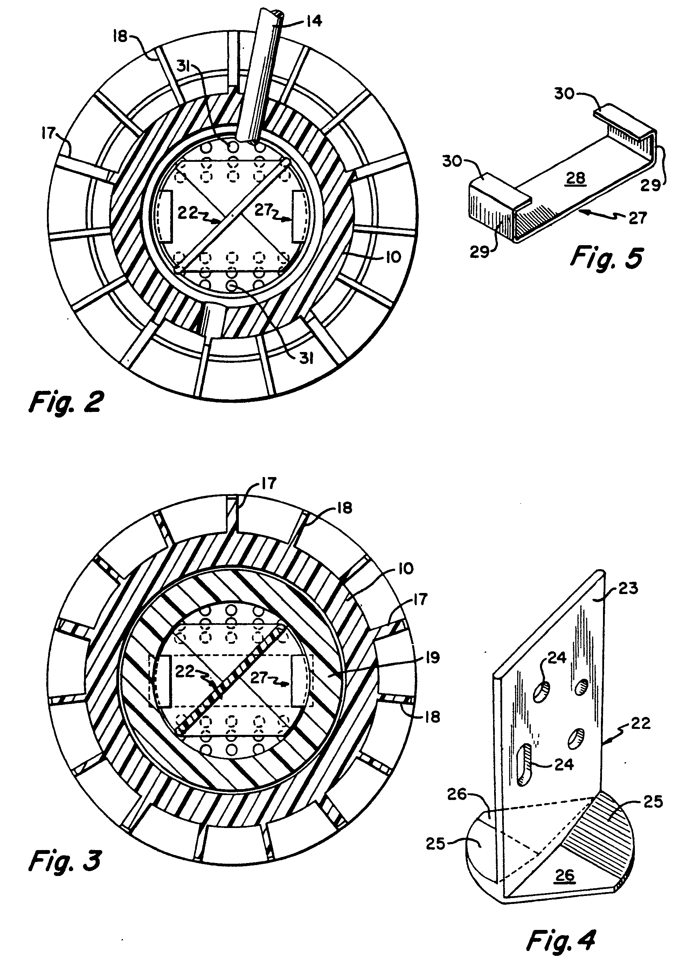

Der Einsatz oder Träger 12 ist ein aus einem Stück bestehendes Bauteil mit einer zylindrischen Wandung 19, die von der oberen Wandung 13 ausgeht. Der durch die beiden Wandungen eingeschlossene Raum bildet eine luftdichte Tasche 20, in die ein Klemmenblock 22 herausnehmbar eingesetzt wird. Wie sich am besten aus Figur 4 ergibt, besteht der Klemmenblock 22 aus einer Trägerplatte 23 mit mehreren Öffnungen 24 zum Anbringen der nicht dargestellten Klemmen für den Anschluss der Prüfleitungen, die in das Gehäuse 10 von unten eingeführt und bis in die Tasche 20 hochgezogen werden. Die Trägerplatte steht gegenüber einer Grundplatte oder Befestigungsplatte vor, die bogenförmige Segmente 25 und Segmente 26 enthält, die auf beiden Seiten der Platte liegen. Die Segmente 25 haben eine geneigt verlaufende Oberfläche, die durch eine kontinuierlich zunehmende Stärke des Segmentes gebildet wird. An den Abschnitt mit der geringsten Stärke des Segmentes 25 schliesst sich das Segment 26 mit gleichmässiger Stärke an. Die Segmente 25 mit den geneigt verlaufenden Oberflächen liegen auf sich gegenüberliegenden Seiten der Platte 23. Die Kanten der Segmente 26 sind abgeflacht und erstrecken sich zwischen den bogenförmig ausgebildeten Kanten der Segmente 25.

Der Klemmenblock 22 ist herausnehmbar in der luftdicht abgeschlossenen Tasche 20 befestigt. Das Einsetzen erfolgt so, dass der Block mit der Befestigungsplatte, die die Segmente 25 und 26 enthält, voran in die Tasche eingeschoben wird, wobei die abgeflachten Kanten der Segmente 26 so liegen, dass sie zwischen den vorstehenden Endabschnitten eines Befestigungselementes 27 hindurchgeführt werden können.

Das Befestigungselement ist auf Figur 5 dargestellt; es besteht aus einem Stützbügel 28, der an beiden Enden zweifach umgebogen ist, so dass Seitenwände 29 und parallel zu dem Bügel verlaufende Endabschnitte 30 gebildet werden. Die Abschnitte 30 bilden die Verriegelungsflächen, die, nachdem die Befestigungsplatte des Klemmenblocks über die Abschnitte 30 hinausgeschoben ist, zunächst mit den Abschnitten 26 in Berührung kommen und sich dann nach weiterem Drehen der Platte mit den geneigt verlaufenden Abschnitten der Segmente 25 verriegeln. Der Bügel 28 des Befestigungselementes erstreckt sich in einer Ausnehmung, die durch eine Anzahl von vorstehenden Noppen 31 begrenzt wird. Diese Noppen liegen an der Rückseite der Platte des Klemmenblockes an. Der Bügel 28 des Befestigungselementes überdeckt die freiliegende Oberfläche einer Einlage 32 aus magnetischem, keramischem Material. Die Einlage 32 wird dazu benutzt, die Lage der Prüfstation aufzufinden, wenn deren Oberfläche nicht sofort zugänglich ist. Die Befestigung des Einsatzes an dem Gehäuse erfolgt mit einer Gewindeschraube 33, z.B. einem Gewindebolzen, der in die Seitenwandung des Gehäuses 10 eingesetzt und auf den eine Mutter aufgeschraubt wird, die in eine entsprechend dimensionierte Öffnung in dem Flansch des Einsatzes passt. Die Gewindeschraube 33 wird dazu verwendet, den Einsatz 12 innerhalb des Gehäuses zu halten. Vorzugsweise liegt dabei das untere Ende auf einem Vorsprung 34 auf, der dazu dient, den Einsatz zusätzlich gegen Belastungen zu sichern. Die Gewindeschraube 33 dient auch dazu, Verschiebungen des Einsatzes von dem Gehäuse zu vermeiden, die durch Auftriebskräfte durch die Tasche 20 auftreten können, wenn Wasser in das Gehäuse eindringt. Auf diese Weise verhindert die Gewindeschraube, dass der Einsatz durch Oberflächenwasser oder aus dem Gehäuse austretendes Wasser, wenn sich der Wasserspiegel anheben sollte, weggeschwemmt wird.

**Patentansprüche**

1. Prüfstation, in der von unten eingezogene elektrische Prüfleitungen für vorzugsweise unterirdische Rohre, Kabel und dergleichen an ein Gerät angeschlossen werden, das auf einen elektrischen Strom oder ein elektrisches Potential anspricht, und die aus einem Gehäuse (10), das fluchtend mit der Oberfläche des Erdbodens liegt und von aussen zugänglich ist, wenn die Prüfstation in den Erdboden eingesetzt ist, einem Einsatz (12), der eine luftdicht abgeschlossene Tasche (20) innerhalb seiner Seitenwände bildet, die von einer festen oberen Wandung (13) ausgehen und mit einem Flansch versehen sind, der nach aussen übersteht und sich auf dem oberen Ende des Gehäuses (10) abstützt, und einem innerhalb des Einsatzes (12) angebrachten Befestigungselement für einen Klemmenblock besteht, der innerhalb der luftdicht abgeschlossenen Tasche (20) des Einsatzes (12) sitzt, wobei das Befestigungselement für den Klemmenblock durch Drehung verriegelbar ist, dadurch gekennzeichnet, dass zur Befestigung des Klemmenblockes in der Tasche (20) Verriegelungsflächen (30) vorgesehen sind, die im Abstand von der festen oberen Wandung (13) des Einsatzes (12) in die Tasche (20) hineinragen, und dass der Klemmenblock (22) eine Befestigungsplatte, die an den Verriegelungsflächen (30) vorbeischiebbar und durch Drehen innerhalb der Tasche mit den Verriegelungsflächen verriegelbar ist, und eine Trägerplatte (23) enthält, die sich von der Befestigungsplatte ausgehend in die luftdicht abgeschlossene Tasche erstreckt.

2. Prüfstation nach Anspruch 1, dadurch gekennzeichnet, dass die Verriegelungsflächen (30) durch nach unten und innen abgebogene Enden eines Bügels (28) gebildet werden, der an der oberen Wandung (13) des Einsatzes (12) angebracht ist.

3. Prüfstation nach den Ansprüchen 1 und 2, dadurch gekennzeichnet, dass das Gehäuse (10) mit radial vorstehenden und im Abstand voneinander angeordneten Rippen (17, 18) versehen ist, die sich in Längsrichtung an der Aussenseite des Gehäuses (10) erstrecken und dieses gegen Verdrehen nach dem Einsetzen in den Erdboden sichern.

4. Prüfstation nach den Ansprüchen 1 bis 3, dadurch gekennzeichnet, dass das Gehäuse (10) am unteren Ende eine Verankerungsstange (14) aufweist, die sich nach aussen in den Erdboden erstreckt, um das Gehäuse in einer Stellung zu halten, bei der sein oberes Ende mit dem Erdboden fluchtet.

5. Prüfstation nach den Ansprüchen 1 bis 4, dadurch gekennzeichnet, dass die obere Wandung (13) des Einsatzes (12) Noppen (31) enthält, die sich in die luftdicht abgeschlossene Tasche (20) erstrecken und das Befestigungselement des Klemmenblockes halten.

6. Prüfstation nach den Ansprüchen 1 bis 5, dadurch gekennzeichnet, dass sich der Rücken des Bügels (28) zwischen den Noppen (31) und der oberen Wandung (13) des Einsatzes erstreckt, an der er anliegt.

7. Prüfstation nach den Ansprüchen 1 bis 6, dadurch gekennzeichnet, dass sie eine magnetische Einlage (32) enthält, die in die obere Wandung (13) des Einsatzes (12) eingesetzt ist und durch das Befestigungselement gehalten wird.

8. Prüfstation nach den Ansprüchen 1 bis 7, dadurch gekennzeichnet, dass das Gehäuse (10) an seinem oberen Ende mit einer Ausnehmung versehen ist, in der der Flansch des Einsatzes (12) abgestützt wird.

9. Prüfstation nach den Ansprüchen 1 bis 8, dadurch gekennzeichnet, dass das Gehäuse (10) innen eine Abstufung (34) zum Abstützen des unteren Endes des Einsatzes (12) enthält.

## Claims

1. A test station apparatus, in which electrical test leads for preferably underground pipes, cables or the like are connected to a device that responds to an electrical current or potential, the test leads extending into the apparatus from below and that apparatus comprising a housing (10) extending flush with the ground surface and having access from aboveground after subterranean implantation, a carrier (12) defining an airtight pocket (20) within the side walls projecting from a solid upper end wall (13) and having a flange extending outwardly therefrom for support by the upper end of the housing and clamp means within the carrier that clamp means being disposed in the interior of the airtight pocket (20) of the carrier (12) and being lockable by rotation, characterised in that the means for mounting the block member within the pocket (20) contain fastening surfaces (30) which extend into the pocket in spaced relationship from the end wall (13) of the carrier (12) and that the block member (22) contains a mounting plate which is arranged for being passed beyond the fastening surfaces and for being locked by rotation and a carrier member (23) extending from the mounting plate into the airtight pocket.

2. The test station apparatus according to claim 1 wherein the fastening surfaces (30) are formed by a clip member (28) with reverse bent end portions (30), the clip member being mounted at the end wall (13) of the carrier (12).

3. The test station apparatus according to claims 1 and 2 wherein the housing (10) includes radially projecting and spaced-apart ribs (17) substantially along the length at the outside surface thereof to anchor the housing against rotation in the ground after subterranean implantation.

4. The test station apparatus according to claims 1 to 3 including an anchor rod (14) supported by the lower end of said housing (10) to extend outwardly into the ground for maintaining the upper end of the housing flush with the ground.

5. The test station apparatus according to claims 1 to 4 wherein the end wall (13) of said carrier (12) includes support knobs (31) extending from said end wall into said airtight pocket (20) to engage the mounting plate of said terminal block member.

6. The test station apparatus according to claims 1 to 5 wherein the clip member (28) extends between said knobs (31) and the end wall (13) of the carrier (12).

7. The test station apparatus according to claims 1 to 6 comprising a magnetic insert (32) implanted within the end wall (13) of the carrier (12) and retained by the clip member.

8. The test station apparatus according to claims 1 to 7 wherein the housing (10) includes a support ledge within the upper end thereof to receive the flange of the carrier (12).

9. The test station apparatus according to claims 1 to 8 wherein the housing (10) includes an internal ledge (34) to support the lower end of the carrier (12).

## Revendications

1. Station de contrôle dans laquelle des conducteurs de contrôle électriques tirés à l'intérieur, d'en bas, pour des tubes, des câbles et analogues, de préférence souterrains, seront raccordés à un appareil qui répond à un courant électrique ou à un potentiel électrique; et qui se compose d'un corps (10) qui se trouve au ras de la surface du sol et qui est accessible de l'extérieur, lorsque la station de contrôle est enfoncée dans le sol; d'une partie rapportée (12) qui forme une poche (20) fermée de manière étanche à l'air à l'intérieur de ses parois latérales qui partent d'une paroi supérieure (13) rigide et qui sont pourvues d'une bride qui dépasse vers l'extérieur et qui prend appui sur l'extrémité supérieure du corps (10); et d'un élément de fixation, adapté à l'intérieur de la partie rapportée (12) pour un bloc á bornes qui repose à l'intérieur de la poche (20) fermée de manière étanche à l'air de la partie rapportée, l'élément de fixation pour le bloc à bornes étant verrouillable par rotation, caractérisée en ce que, pour la fixation du bloc à bornes dans la poche (20), on a prévu des surfaces de verrouillage (30) qui pénètrent dans la poche (20) à distance de la paroi supérieure rigide (13) de la partie rapportée (12), et en ce que le bloc à bornes (22) comprend une plaque de fixation qui peut être déplacée devant les surfaces de verrouillage (30) et être verrouillée avec les surfaces de verrouillage à l'intérieur de la poche, par rotation, et comprend une plaque-support (23) qui, partant de la plaque de fixation, s'étend dans la poche fermée de manière étanche à l'air.

2. Station de contrôle suivant la revendication 1, caractérisée en ce que les surfaces de verrouillage (30) sont formées par les extrémités, coudées vers le bas et vers l'intérieur, d'un étrier (28) qui est adapté à la paroi supérieure (13) de la partie rapportée (12).

3. Station de contrôle suivant les revendications 1 et 2, caractérisée en ce que le corps (10) est pourvu de nervures (17, 18) faisant saillie radialement et disposées à distance les unes des autres, qui s'étendent en direction longitudinale du côté extérieur du corps (10), et empêchent la rotation de celui-ci après son enfoncement dans le sol.

4. Station de contrôle suivant les revendications 1 à 3, caractérisée en ce que le corps (10) comprend à son extrémité inférieure une barre d'ancrage (14) qui s'étend vers l'extérieur dans le sol pour maintenir le corps dans une position dans laquelle son extrémité supérieure se trouve au ras du sol.

5. Station de contrôle suivant les revendications 1 à 4, caractérisée en ce que la paroi supérieure (13) de la partie rapportée (12) comprend des boutons (31) qui s'étendent dans la poche (20) fermée de manière étanche à l'air et qui maintiennent l'élément de fixation du bloc à bornes.

6. Station de contrôle suivant les revendications 1 à 5, caractérisée en ce que le revers de l'étrier (28) s'étend entre les boutons (31) et la paroi supérieure (13) de la partie rapportée à laquelle il s'applique.

7. Station de contrôle suivant les revendications 1 à 6, caractérisée en ce qu'elle comprend une garniture magnétique (32) qui est engagée dans la paroi supérieure (13) de la partie rapportée (12) et qui est maintenue par l'élément de fixation.

8. Station de contrôle suivant les revendications 1 à 7, caractérisée en ce que le corps (10) est pourvu à son extrémité supérieure d'un évidement dans lequel prend appui la bride de la partie rapportée (12).

9. Station de contrôle suivant les revendications 1 à 8, caractérisée en ce que le corps (10) comprend intérieurement un épaulement (34) pour l'appui de l'extrémité inférieure de la partie rapportée (12).

Fig. 1

0 015 579

Fig. 2

Fig. 5

Fig. 3

Fig. 4